Europäisches Patentamt

European Patent Office

Office européen des brevets

(11) Publication number: **0 509 159 A1**

## EUROPEAN PATENT APPLICATION

(21) Application number: **91303315.5**

(22) Date of filing: **15.04.91**

(51) Int. Cl.⁵: **G09F 11/14**, G09F 13/04

(43) Date of publication of application:
**21.10.92 Bulletin 92/43**

(84) Designated Contracting States:
**BE DE DK ES FR GB LU NL SE**

(71) Applicant: **FLORIDA PLASTICS MIDWEST INC.**
**10200 South Kedzie Avenue**
**Evergreen Park, Illinois 60642(US)**

(72) Inventor: **Keyser, William W.**

9112 South Ridgeway
Evergreen Park, Illinois 60642(US)
Inventor: **Keyser, David B.**
9152 South Central Park
Evergreen Park, Illinois 60642(US)

(74) Representative: **Carpenter, David et al**
**MARKS & CLERK Alpha Tower Suffolk Street**
**Oueensway**
**Birmingham B1 1TT(GB)**

(54) **Display sign having removable tambour.**

(57) A display sign (20) is disclosed which comprises a mainframe (105) permanently attached to a support (106), and a sub-frame (80) bearing display indicia. The sub-frame (80) is removably mounted on the mainframe (105). A front panel (110), movable between a closed position affixed to the mainframe (105) and an open position permitting access to the interior of the mainframe (105), normally covers the sign front. If desired, an endless menu board tambour (30) can be journalled upon the sub-frame (80) for installation within the sign (20). The endless, flexible tambour (30) includes a plurality of inflexible tambour slats (32), and each slat (32) is joined to two adjacent slats (32) by knuckle-and-socket joints.

FIG.4

This invention relates to signs and displays, and more particularly to an illuminated sign in which a number of displays of various sorts can be arrayed. At least some of the displays can include tambour arrangements for quickly altering displayed information.

Signs and displays in modern fast-food restaurants are exceedingly important. These signs orient people entering the establishment to the products available and to the locations of various facilities. Importantly, they also consciously and unconsciously encourage a desire for the restaurant's products by displaying pictures and information about the products in an attractive way.

Among the most important of these signs is that which is located in an overhead position above the order and delivery counter. This sign may bear product pictures, and a menu or listing of the products available, and it can provide pricing and other information as well.

If the establishment is to be operated efficiently, it may be desirable to be able to quickly and easily change a breakfast menu for a luncheon menu. If only one menu is displayed, customer uncertainty is obviated, and requests for unavailable products are unconsciously minimized.

It is also advantageous if this changeable menu array can be located at any one of a number of horizontal positions on the large overhead sign. In this way, the establishment operator can locate the changeable menu board in a position which most logically and attractively relates the menu board to other photographic or visual displays mounted on and in the signboard.

It is accordingly the general object of the present invention to provide a visually attractive overhead sign for displaying an array of items, and to provide such a sign which can be manufactured at a commercially attractive cost.

Another object is to provide a sign which provides both static displays and a changeable menu board. Still another object is to provide such a sign in which menus or like information can be changed easily and quickly. A related object is to provide such a sign in which the changeable menu can be located in any of a variety of horizontally arrayed positions in the sign.

Yet another object is to provide such a sign in which the interior of the sign can be quickly accessed for cleaning, repair or alteration by even inexperienced personnel.

## Summary of the Invention

To meet these objectives, a display sign is provided which comprises a mainframe permanently attached to a support, and a sub-frame bearing display indicia. The sub-frame is removably mounted on the mainframe. An endless menu board tambour can be journalled upon the sub-frame for installation within the sign. The endless, flexible tambour includes a plurality of inflexible tambour slats, and each slat is joined to two adjacent slats by knuckle-and-socket joints. A front panel, movable between a closed position affixed to the mainframe and an open position permitting access to the interior of the mainframe, normally covers the tambour. Additional front panels can be mounted to the mainframe; these front panels bear static displays comprising translucent product photographs or the like.

The invention will further be described, by way of example, with reference to the accompanying drawings in which like reference numerals refer to like parts, and in which:

FIG. 1 is an elevational view showing a sign constructed in accordance with an example of the present invention as it appears when the sign is installed in an overhead position in a fast-food restaurant;

FIG. 2 is a perspective view showing a portion of the sign which includes a changeable tambour menu board or like information display;

FIG. 3 is a front elevational view of the menu board portion of the sign shown in FIG. 2;

FIG. 4 is a sectional view taken substantially in the plane of line 4-4 in FIG. 3 and showing the sign interior; a sign mainframe; a sub-frame; and a movable tambour carried by the sub-frame;

FIG. 5 is a perspective view showing in further detail the sub-frame and tambour mounting mechanism shown in FIG. 4;

FIG. 6 is a fragmentary elevational view showing in further detail a tambour drive mechanism illustrated in FIG. 5;

FIG. 7 is an elevational view showing in further detail a tambour drive sprocket and associated tambour slats;

FIG. 8 is a front elevational view of a typical tambour slat;

FIG. 9 is an exploded view showing in further detail a typical tambour slat and an associated indicia-bearing board adapted to be carried by the slat; and

FIG. 10 is a side elevational view showing the interconnection and arrangement of the sign mainframe and sub-frame.

## Detailed Description of the Invention

While the invention will be described in connection with a preferred embodiment, it will be understood that it is not intended to limit the invention to this embodiment. On the contrary, it is intended to cover all embodiments of the invention as defined by the spirit and scope of the appended claims.

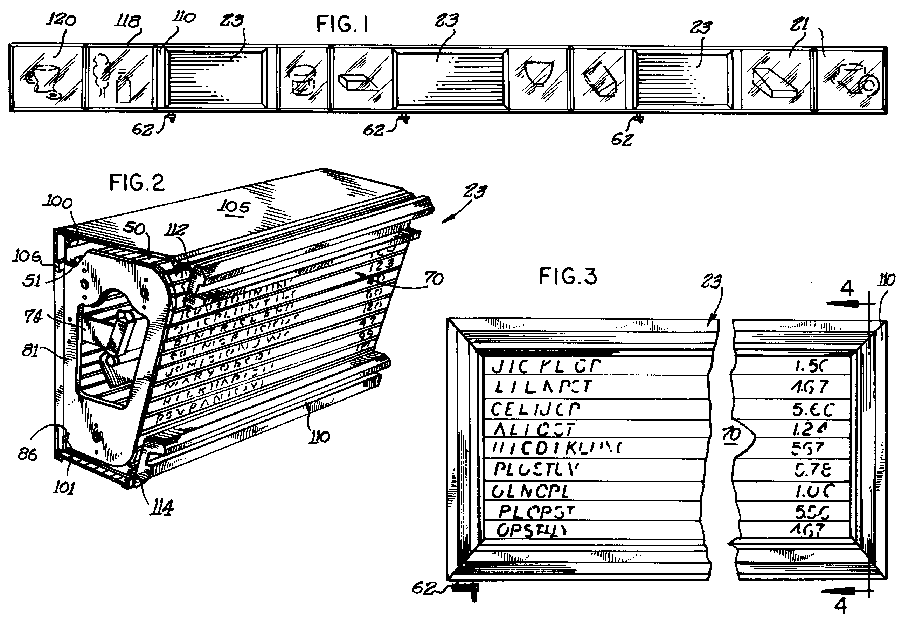

Turning first to FIG. 1, there is shown a sign 20 as it appears when it it installed in a fast-food restaurant or shop. Typically, this sign 20 is located in an overhead position above an order and product delivery counter. It is contemplated that this sign can be ten feet, twenty feet, or even more in horizontal extent. As suggested in FIG. 1, the sign includes a horizontally extending array of translucent photographs or other graphic illustrations 21 of available products. In addition, menu boards 23 are located at various horizontal positions along the sign. As suggested in FIGS. 2 and 3, these menu boards 23 typically bear a list of available products and their corresponding prices.

In many fast-food establishments, operators wish to offer one menu at one time of day and a different menu at a different time of day. For example, it is desirable to be able to offer a breakfast menu during morning hours, and then change to a luncheon and dinner menu at around 10 or 11 AM. If the menu not in use can be withdrawn or hidden from sight, customer confusion and uncertainty can be eliminated and customers can be discouraged from asking for products which are not just then available.

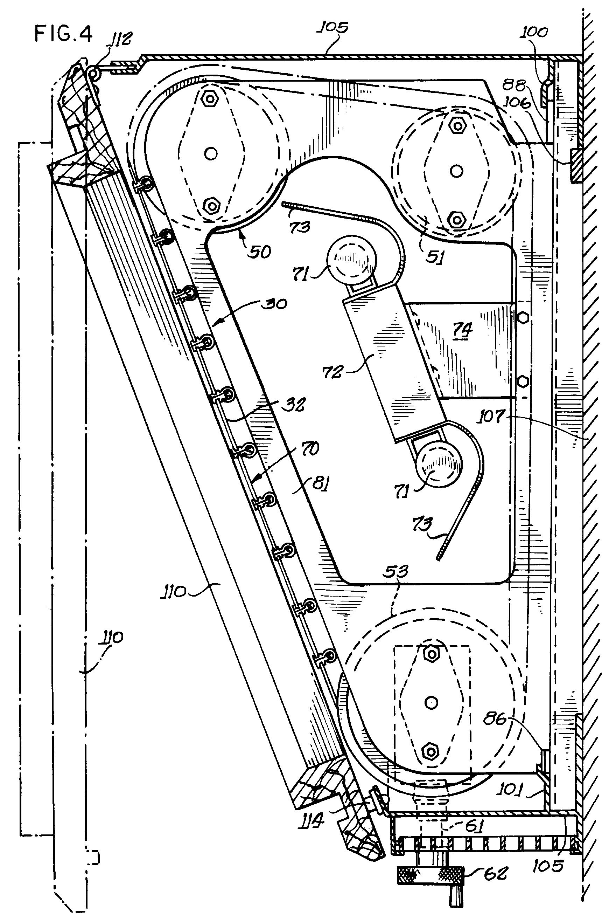

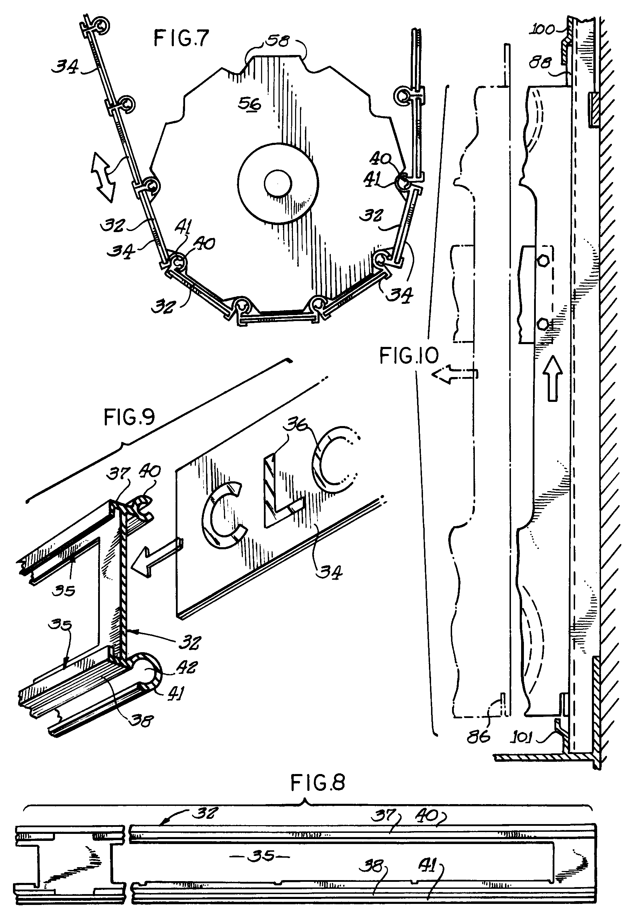

To provide an alterable menu in accordance with this aspect of the invention, the sign board 20 is provided with a tambour construction 30 as shown in FIG. 4. This endless-belt tambour 30 here takes the form of a plurality of inflexible tambour slats 32. As suggested in FIGS. 8 and 9, each tambour slat 32 is adapted to bear a sign board 34 in an open-backed slideway arrangement 35. The board 34 can have transparent or translucent portions 36 constituting letters or numbers to provide information to the sign reader. These boards 34 can be slid into the slideway or track structure 35 as indicated by the arrow in FIG. 9. Illumination equipment 71-74 described below highlights the indicia when the supporting slats 32 and boards 36 are positioned at the front of the sign, as suggested in FIG. 4.

As shown in FIGS. 7 and 9, each slat 32 is provided along one elongated edge 37 with a knuckle element 40 and along the opposite elongated edge 38 with a socket formation or element 41. The knuckle element 40 has the cross-sectional shape of at least a segment of a right circular cylinder having a curved exterior surface of predetermined radius. Similarly, the socket element 41 has the cross-sectional shape of at least a segment of a hollow right circular cylinder, and the curved interior surface 42 of this socket 41 is formed so as to have a radius substantially similar to the radius of the curved outer surface 43 of the knuckle cylinder or element 40. As especially suggested in FIG. 7, the knuckle element 40 of one slat can be internested with the socket element 41 of an adjacent slat so as to provide a flexible pivoting joint 45. In this way, all the slats 32 are joined together in an endless array to form the flexible tambour 30.

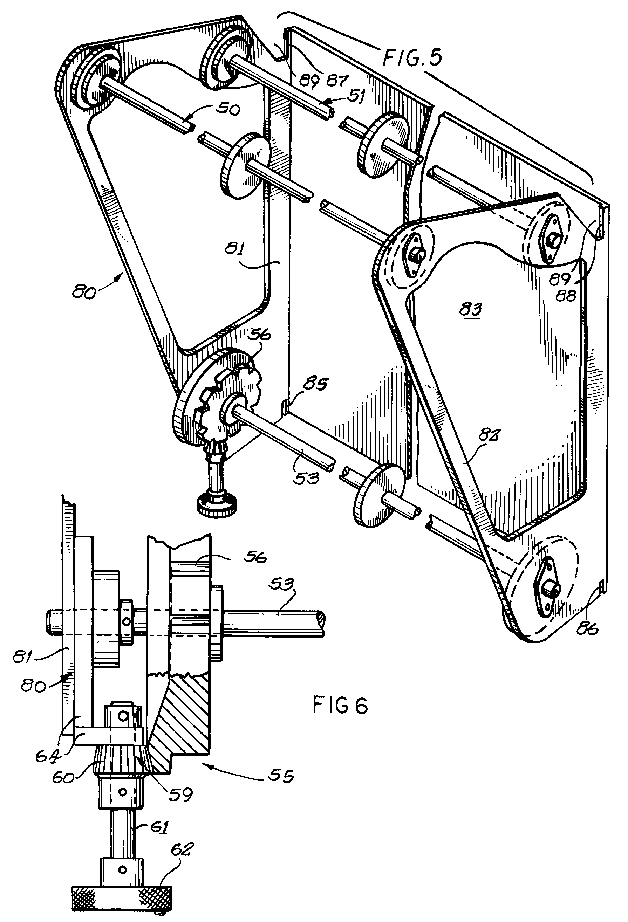

As illustrated in FIGS. 4 and 5, the tambour 30 is installed over two idler pulley devices 50, 51, and over a drive sprocket arrangement 53.

In accordance with another aspect of the invention, an inexpensive yet surprisingly rugged and effective tambour drive mechanism 55 is connected to the tambour drive sprocket assembly 53, as shown in FIGS. 5 and 6. This tambour drive arrangement 55 takes the form of a sprocket wheel 56 having gear-teeth-like indentations 58 formed in the sprocket circumference at positions corresponding to the tambour joints 45 so as to engage the joints 45 and drive the tambour 30 when the sprocket wheel 56 turns, as suggested by FIG. 7.

Manufacturing and assembly costs can be reduced by providing this tambour drive sprocket 56 with crown gear teeth 58 in beveled array, as especially shown in FIGS. 5 and 6. The drive 55 further includes a pinion gear 59 having crown teeth 60 in beveled array to mate with the tambour drive sprocket teeth 58. A shaft 61 and a hand wheel 62 are provided for manually turning the pinion gear 59 and accordingly moving the tambour drive sprocket 56 and tambour 30 itself from one position and display array to another position and display array. As suggested in FIGS. 1 and 4, this shaft 61 can be extended so as to locate the drive hand wheel 62 at a position outside the frame portions of the sign for ready access by operating personnel. The shaft can be journalled to a bracket 64 affixed to the frame 80.

Illumination is provided to the front course 70 of the tambour. This illumination is provided by electric lights (here fluorescent tubes 71) located with their support circuitry 72 and suitable reflectors 73 at a position inside the tambour 30 itself. A lamp mounting structure 74 can extend past the lateral ends of the tambour to suitable fixed support elements (not shown) in known manner. The lamps 71 provide illumination to and through the indicia 36 formed in the tambour slat boards 34.

In accordance with another aspect of the invention, the tambour 30, the tambour drive mechanism 55 and tambour illumination mechanism 71-74 are assembled in a sub-frame unit 80 for easy removal so as to permit quick and inexpensive repair and sign reconfiguration. To this end, the pulleys 50, 51 and 53; and the illumination unit 71, 72, 73 and 74 are mounted on a sub-frame 80 as shown in FIGS. 4 and 5. Here, this U-shaped sub-frame 80 takes the form of two wings or arms 81, 82 joined at the rear by a bight element 83. At the lower corners, slots 85, 86 are provided, and at the top ears 87, 88 extend above wing reliefs 89, 90. These ear elements 87, 88 and slots 85, 86 are shaped and positioned to engage Z-shaped channels 100, 101, which are affixed to and made part of an immobile mainframe 105, as more particularly indicated in FIG. 4. The mainframe 105 is permanently secured, in turn, to a permanent support 106 affixed to a wall 107. When it is necessary to remove the sub-frame 80 for repair or to clean the interior of the sign or to alter the sign configuration, the sub-frame 80 is first lifted or pushed upwardly as suggested by the solid arrow in FIG. 10, and then pulled outwardly as suggested by the dotted arrow, and removed from the mainframe 105. Installation or re-installation simply involves lifting the sub-frame 80 into place and gently dropping the sub-frame 80 so that the slots 85, 86 and ears 87, 88 engage the mainframe 105.

To obtain access to the sub-frame 80 and interior of the sign within the mainframe 105, a front panel 110 is attached at its top by a hinge 112 of known design to the outer front of the frame 105 as suggested in FIG. 4. A catch 114 of known design secures the front panel 110 in its normal display position indicated in solid lines in FIG. 4. The front panel can be designed to support and display translucent photographs of products or other indicia. When it is desired to remove or adjust the sub-frame 80, the panel 114 is unlatched and swung from the position indicated in solid lines to and through the position indicated in dashed lines in FIG. 4.

It will be understood that the mainframe 105 can extend over the entire horizontal length of the sign illustrated in FIG. 1. A number of independently hinged front panels 110 may be provided, as suggested by the individual panels 110, 118 and 120 (FIG. 1). Behind these independent panels 118 and 120, lights alone are mounted; no tambour construction 23 is required. But if it is desired to substitute a tambour construction 23 for a static display 118, 120 at a particular horizontal location, a tambour sub-frame 80 and associated mechanism can be easily and quickly installed. Similarly, if it is desired to eliminate a tambour 23, the tambour sub-frame 80 and attendant mechanism can be easily and quickly removed and a static transparent or translucent display installed in the front panel 110.

## Claims

1. A display sign, comprising, in combination, a mainframe (105) permanently attached to a support (106), a sub-frame (80) bearing display indicia and being removably mounted on the mainframe (105), and at least one front panel (110) movable between a closed position affixed to the mainframe (105) and an open position permitting access to the interior of the mainframe (105) and to the sub-frame (80).

2. A display sign according to Claim 1 further including front panel means (112) for pivotally attaching the front panel (110) to the mainframe (105) and for permitting the front panel (110) to pivot between said closed position and said open access position.

3. A display sign according to Claim 1 or 2 wherein one of said frames (80, 105) is provided with a back (83) and a z-shaped channel (100, 101) affixed to said back (83) to form a groove of pre-determined thickness in front of said back (83), and wherein the other of said frames (80, 105) is provided with an ear (87, 88) having a thickness less than said groove and acting to at least partly secure one of the frames to the other when said ear is inserted in said groove.

4. A display sign according to any one of Claims 1 to 3 further including sign illumination means (71, 72, 73, 74) mounted within said sign for illuminating sign indicia adjacent said front panel (110).

5. A display sign, comprising, in combination, a frame (80) and a tambour (30), the tambour (30) including a plurality of inflexible tambour slats (32), each tambour slat being adapted to bear sign indicia and having one element of a knuckle-and-socket joint mechanism arrayed along one edge (37), and the other element of another knuckle-and-socket joint mechanism arrayed along the other edge (38) so as to flexibly joint each tambour slat (32) to two adjacent tambour slats (32) in endless array, the sign further including at least one idler pulley means (50, 51) journalled on the frame (80) and supporting a portion of the tambour (30), and at least one drive pulley means (55) journalled on the frame and having a tambour drive sprocket (53) having a series of regularly spaced apart recesses adapted to directly engage the slat joint mechanisms.

6. A display sign according to Claim 5 further including tambour drive means coupled to said tambour drive sprocket.

7. A display sign according to Claim 6 wherein said tambour drive sprocket (53) includes crown gear teeth in beveled array, said tambour drive means further including pinion gear means having crown gear teeth in beveled array and mating with the tambour drive sprocket.

8. A display sign according to Claim 7 further including crank means (62) attached to said pinion gear for manually turning said pinion gear and accordingly moving said tambour (30) from one position and display array to another position and display array.

9. A display sign according to any one of Claims 5 to 8 further including illumination means (71, 72, 73, 74) located within the endless array of tambour slats (32) for providing illumination to and through indicia carried on the tambour slats.

10. A display sign according to any one of Claims 5 to 9 wherein each tambour slat (32) includes mounting means for mounting display indicia; wherein said knuckle element (40) has the cross-sectional shape of at least a segment of a right circular cylinder having a curved exterior surface of pre-determined internal radius; and wherein said socket
element (41) has the cross-sectional shape of at least a segment of a hollow right circular cylinder having a curved interior surface of a radius substantially similar to the radius of the exterior surface of the knuckle element so as to permit the knuckle (40) of one tambour slat (32) to be pivotably internested in the socket (41) of an adjacent tambour slat (32) and thereby form a slat joint mechanism joining the adjacent tambour slats (32).

11. A display sign, comprising, in combination, a horizontally extended mainframe (105) permanently attached to a support (106), a plurality of horizontally arrayed front panels (110) each independently movable between a closed position affixed to the mainframe (105) and an open position permitting access to the interior of the mainframe (105), and at least one sub-frame (80) being removably mounted on the mainframe (105) behind one of said front panels (110), the sub-frame (80) mounting an endless flexible tambour (30) bearing display indicia and other front panels (110) supporting static illuminable displays when those front panels (110) are in their closed positions affixed to the mainframe (105).

12. A display sign according to Claim 11 further including illumination means (71, 72, 73, 74) located within the mainframe (105) and illuminating the static displays; additional illumination means being located within the endless tambour (30) for providing illumination to and through indicia carried on the tambour (30).

13. A display sign, comprising, in combination, a mainframe (105), a sub-frame (80) removably mounted on the mainframe (105), and a tambour (30) carried on the sub-frame (80), the tambour (30) including a plurality of inflexible tambour slats (32), each tambour slat (32) being joined to two adjacent tambour slats (32) in endless array, the sign further including at least one idler pulley means (50, 51) journalled on the sub-frame (80) and supporting a portion of the tambour (30), and at least one drive pulley means (55) journalled on the sub-frame (80) and having a tambour drive sprocket (53) adapted to successively engage the tambour slats (32)

14. A display sign according to Claim 13 wherein said mainframe (105) is permanently attached to a support (106), and wherein the display sign further includes a plurality of horizontally arrayed front panels (110 each independently movable between a closed position affixed to the mainframe (105) and an open position permitting access to the interior of the mainframe (105).

FIG.1

FIG.2

FIG.3

EP 0 509 159 A1

FIG.4

FIG. 5

FIG 6

FIG.7

FIG.9

FIG.10

FIG.8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 827 644 (TRAME)<br>* whole document * | 5,6,9,<br>10 | G 09 F 11/14<br>G 09 F 13/04 |
| A | | 1,2,4,<br>11-14 | |
| | --- | | |
| A | DE-C- 558 336 (BEDDISON)<br>* whole document * | 5,6,9,<br>11-13 | |
| | --- | | |
| A | DE-A-2 044 028 (THE SEEBURG<br>CORPORATION OF DELAWARE)<br>* whole document * | 5,6,11,<br>13,14 | |
| | --- | | |
| A | US-A-4 367 604 (PORTER et al.)<br>* figures 12; column 7, lines 29-51 * | 1,2,4 | |
| | ----- | | |

TECHNICAL FIELDS
SEARCHED (Int. Cl.5)

G 09 F

The present search report has been drawn up for all claims

| Place of search | Date of completion of the search | Examiner |
|---|---|---|
| BERLIN | 25-10-1991 | TAYLOR P I |

EPO FORM 1503 03.82 (P0401)